# EUROPÄISCHE PATENTSCHRIFT

(11) **EP 2 072 011 B1**
(45) Veröffentlichungstag und Bekanntmachung des Hinweises auf die Patenterteilung: **16.07.2014**
(21) Anmeldenummer: 07024424.9
(22) Anmeldetag: 17.12.2007
(51) Int. Cl.: H04B 10/00, G02B 6/36

(54) **Anordnung aus zwei zueinander rotativ bewegbaren Elementen**
Assembly made from two elements which are rotatable relative to one another
Agencement constitué de deux éléments se déplaçant l'un par rapport à l'autre de manière rotative

(43) Veröffentlichungstag der Anmeldung: 24.06.2009
(73) Patentinhaber: Siemens Aktiengesellschaft, 80333 München (DE)
(72) Erfinder: Denk, Joachim, Dr., 90419 Nürnberg (DE); Schierling, Hubert, Dr., 91052 Erlangen (DE)

(56) Entgegenhaltungen:
- JP-U- S58 152 604
- US-A- 4 525 025
- US-A1- 2004 062 344
- US-A1- 2006 127 098
- US-A1- 2007 036 484

## Beschreibung

Die Erfindung betrifft eine Anordnung aus zwei Elementen, von denen das eine Element relativ zu dem anderen Element um eine Drehachse drehbar ist, wobei an beiden Elementen eine die Kommunikation von dem einem zum anderen Element ermöglichende Einrichtung angeordnet ist.

Die US 2004/062344 A1 offenbart eine Anordnung, bei der Daten von einem rotierenden Teil zu einem stationären Teil, z.B. eines Computertomographiesystems, übertragen werden. Dabei wird ein Lichtkanal von zwei optisch reflektierenden Bauteilen begrenzt, die zum stationären Teil der Maschine beziehungsweise zum beweglichen Teil der Maschine gehören. Der Lichtkanal hat einen parabolischen Querschnitt. Eine Lichtquelle, die zur lichtmodulierten Datenübertragung dient, befindet sich am rotierenden Teils des Systems und strahlt moduliertes Licht, mit dem Informationen übertragen werden, in den Lichtkanal in beide entgegenlaufenden Kanalrichtungen. Die Lichtstrahlen werden durch Reflexion an den optisch reflektierenden Bauteilen einer Ringform folgend zu einem Lichtempfänger geleitet, der im stationären Teil der Maschine angeordnet ist.

Die Druckschrift US 4525025 offenbart eine Anordnung zur Übertragung von Daten zwischen einem stationären Maschinenteil und einem zu diesem rotierbaren Rotor. Eine am Rotor angeordnete Lichtleitfaser und eine weitere Lichtleitfaser, die am stationären Maschinenteil angeordnet ist, enden in einem Hohlraum zwischen dem Rotor und dem stationären Maschinenteil. Die vom stationären Maschinenteil gebildete Wand des Hohlraums ist ringförmig und weist eine Oberfläche auf, an der Licht reflektiert werden kann. Somit kann ein Lichtsignal von einer Lichtleitfaser zur anderen Lichtleitfaser durch den Hohlraum übertragen werden.

JPS58152604U offenbart eine Anordnung aus zwei Elementen, von denen das eine Element relativ zu dem anderen Element um eine Drehachse drehbar ist, wobei die Anordnung eine an beiden Elementen angeordnete, die Datenübertragung von dem einen zum anderen Element ermöglichende Einrichtung aufweist, wobei die Einrichtung an beiden Elementen jeweils einen Mantelkörper umfasst, welcher eine Innenfläche hat, welche ringförmig ist und konzentrisch zu der Drehachse angeordnet ist, wobei an beiden Elementen der jeweilige Mantelkörper mindestens eine Öffnung aufweist, und wobei die Mantelkörper jeweils einen ringförmigen Lichtleiterkern der Einrichtung umgeben, wobei die Innenfläche einen teilkreisförmigen Querschnitt aufweist und sich die teilkreisförmigen Querschnitte der Innenflächen zu einem Kreis ergänzen, wobei an dem einen Element Licht von außerhalb des Mantelkörpers über die zugeordnete Öffnung in den durch die Innenfläche des jeweiligen Mantelkörpers definierten Raum mittels einer Lichtquelle einkoppelbar ist und an dem anderen Element aus dem durch die Innenfläche des jeweiligen Mantelkörpers definierten Raum Licht über die zugeordnete Öffnung nach außerhalb des Mantelkörpers zu einem Lichtempfänger auskoppelbar ist.

Die US 2006/0127098 A1 offenbart eine Anordnung, bei der Daten von einer rotierenden ersten Einheit zu einer stationären zweiten Einheit übertragen werden. Dabei wird von der ersten Einheit ein ringförmiger, konzentrisch zur Drehachse angeordneter Halbkanal ausgebildet, entlang dem Licht durch Reflexion geleitet werden kann. Zudem sind zwei Lichtkoppler beschrieben, die das Licht in den von der ersten Einheit gebildeten Lichtleiter ein- bzw. auskoppeln können, wobei ein Lichtleiter an der ersten Einheit und ein Lichtleiter an der zweiten Einheit der beiden zueinander rotierenden Einheiten angeordnet ist.

Aus der Druckschrift US 2007/0036484 A1 ist ein elektronisches Gerät, etwa ein Mobiltelefon, bekannt, bei welchem Licht zwischen zwei relativ zueinander beweglichen Bauteilen übertragen wird, nämlich zwischen einem drehbaren Bedienelement einerseits und einem ortsfesten Basisteil andererseits. Hierbei werden auf der einen Seite Lichtquellen und auf der anderen Seite Lichtdetektoren eingesetzt, um die jeweils aktuelle Stellung des drehbaren Bedienelements zu ermitteln.

Eine solche Anordnung wird bei modernen Maschinenkonzepten, z. B. bei Rundtaktmaschinen und Produktionsmaschinen, benötigt. Konventionell erfolgt die Datenkommunikation drahtgebunden. Soll Endlosdrehen ermöglicht werden, ist eine drahtlose Übertragung über eine Drehschnittstelle notwendig. Bekannt ist es, die Datenkommunikation über Lichtsignale erfolgen zu lassen. Am einfachsten ließe sich dies dadurch lösen, dass genau in der Drehachse an dem einen Element ein Lichtsender und an dem anderen Element ein Lichtempfänger angeordnet sind. Diese einfache Anordnung ist jedoch häufig nicht realisierbar, weil Hohlwellen verwendet werden müssen, um zusätzliche Medien, z.B. Kühlflüssigkeit, an weitere Drehübertrager heranführen zu können. Eine Problematik besteht nun darin, dass nicht mehr ein punktförmiger Sender und ein punktförmiger Empfänger verwendet werden können, und trotzdem die Kommunikationssignale bei beliebigen Drehstellungen übertragen können werden müssen. Die meisten Bemühungen gehen dahin, senderseitig die Lichtsignale über einen vollständigen Ring abzugeben und einen punktförmigen Empfänger vorzusehen, der dann bei jeder Drehstellung des drehbaren Elements Licht von dem Ring empfängt. Es ist sehr aufwändig, einem solchen Ring Lichtsignale aufzuprägen. Ein Beispiel für eine solche Anordnung, bei der ein Lichtring um eine Hohlwelle zur Datenkommunikation erzeugt wird, ist in der DE 10 2006 054 052.2 beschrieben.

Es ist Aufgabe der Erfindung, eine einfach zu bauende Anordnung der eingangs genannten Gattung bereitzustellen, bei der die Einrichtung zur Datenkommunikation möglichst unauffällig gestaltet ist und bei der Kosten eingespart werden.

Die Aufgabe wird durch eine Anordnung gemäß Patentanspruch 1 gelöst. Es ist vorgesehen, dass zu der Einrichtung für die Datenkommunikation an beiden Elementen jeweils ein Mantelkörper vorgesehen ist. Das genaue Aussehen des Mantelkörpers ist nicht relevant. Wesentlich ist, dass der von dem Mantelkörper umgebene Raum eine definierte Form haben muss. Dieser Raum lässt sich durch die Innenfläche des Mantelkörpers definieren: Sie muss ringförmig sein, und zwar konzentrisch zur Drehachse angeordnet sein. Erfindungsgemäß ist vorgesehen, dass sie einen teilkreisförmigen Querschnitt aufweist. Die Kommunikation zwischen den beiden Einrichtungen erfolgt nun so: Die Mantelkörper beider Elemente weisen eine Öffnung auf. An einem Element ist eine Lichtquelle vorgesehen, und diese koppelt Licht in den durch die Innenfläche des Mantelkörpers definierten Raum ein. An dem anderen Mantelkörper ist der Öffnung ein Lichtempfänger zugeordnet, so dass aus dem durch die Innenfläche des Mantelkörpers definierten Raum Licht zu dem Lichtempfänger über die besagte Öffnung ausgekoppelt werden kann. So muss durch die Gestaltung der Anordnung gewährleistet sein, dass von der Lichtquelle eingekoppeltes Licht tatsächlich irgendwann zum Lichtempfänger gelangt. Dies erfolgt über Mehrfachreflexionen des Lichts an den Innenflächen der Mantelkörper. Das Licht wird so oft reflektiert, bis es irgendwann zu der Stelle des einen Mantelkörpers gelangt, an dem die Öffnung zu dem Lichtempfänger führt. Es ist dann unabhängig vom Drehwinkel des einen Elements relativ zu dem anderen Element gewährleistet, dass das Licht von der Lichtquelle irgendwann zu dem Lichtempfänger gelangt. Die Erfindung hat den Vorteil, dass eine einzige Lichtquelle, z. B. eine Sendediode verwendet werden kann, und dass ein einziger Lichtempfänger, eine einzige Empfangsdiode verwendet werden kann. Dadurch ist bereits die Herstellung der Anordnung kostengünstig, und im Betrieb wird Energie eingespart, anders als beispielsweise bei Ausführungsformen des Standes der Technik, bei denen eine Vielzahl von Lichtquellen verwendet werden.

Die teilkreisförmigen Querschnitte der Innenflächen der beiden Mantelkörper ergänzen sich zu einem Kreis, und zwar bevorzugt so, dass jeder Mantelkörper einen halbkreisförmigen Querschnitt bereitstellt. Dies bedeutet nichts anderes, als dass der durch die Innenfläche definierte Raum genau die Hälfte eines Torus ist, und der durch die innere Fläche definierte Raum des jeweils anderen Elements die jeweils zweite Hälfte des Torus ist. Gemäß einem ersten Aspekt der Erfindung wird einfach ein ringförmiger Lichtwellenleiter mit kreisförmigem Querschnitt in zwei Teile geteilt, die an den unterschiedlichen Elementen einander gegenüber liegend angeordnet werden. In diesem Fall umgeben die Mantelkörper wie bei Lichtwellenleitern üblich jeweils einen ringförmigen Lichtleiterkern, und zwar weist das Material, aus dem der Lichtleiterkern gebildet ist, eine höhere Brechzahl auf als das Material, aus dem der Mantelkörper gebildet ist. Bekanntlich wird dann an der Innenfläche des Mantelkörpers Licht reflektiert.

Der Vorteil der einfachen Herstellbarkeit wird durch den Nachteil erkauft, dass die Toleranzen extrem klein sind, was den Spalt zwischen den beiden Tornushälften angeht. Zudem muss der Lichtstrahl, nachdem er in der einen Torushälfte reflektiert wurde, nach dem Durchlaufen des Lichtleiterkerns zunächst vom Lichtleiterkern in die Luft zwischen den beiden Elementen in besagtem Spalt eintreten, und dann von der Luft wieder in den Lichtleiterkern der anderen Torushälfte. Bei allen diesen Übergängen treten Streuverluste auf. Gemäß einem zweiten Aspekt der Erfindung werden diese Nachteile vermieden, wenn in dem Mantelkörper ein Fluid angeordnet ist. Die Innenfläche des Mantelkörpers bildet also die Grenze des aus einem Festkörper bestehenden Teils der Einrichtung, so dass ein Hohltorus gebildet ist.

**Bei dem zweiten Aspekt der Erfindung ist vorgesehen**, dass eine Flüssigkeit verwendet wird, die dann die beiden Hohltoride ausfüllt und naturgemäß auch den Raum zwischen den beiden Elementen, von denen das eine relativ zum anderen drehbar ist. Dies wird am besten derart realisiert, dass sich die Flüssigkeit in einer Kammer zwischen zwei abgedichteten Drehlagern befindet, die die beiden Elemente miteinander koppeln. Die Flüssigkeit sollte durchsichtig **sein. Der** Mantelkörper ist aus einem Material zu bilden, das eine niedrigere Brechzahl hat als die Flüssigkeit. Z. B. kann der Mantelkörper aus Glas bestehen und als Flüssigkeit Glyzerin verwendet werden. Diese Ausführungsform ist der Ausführungsform mit den Lichtwellenleiterhälften ähnlich, weil statt des Lichtwellenleiterkerns eine lichtwellenleitende Flüssigkeit verwendet wird.

Die Ausführungsformen, bei denen das Fluid verwendet wird, haben den Vorteil, dass es keine Übergänge zwischen unterschiedlichen Medien gibt, so dass keine Verluste in der Lichtstrahlleistung auftreten, bis der Lichtstrahl zu dem Lichtempfänger gelangt. Es kann dann möglicherweise mit einer schwächeren Lichtquelle gearbeitet werden bzw. einem weniger empfindlichen Lichtempfänger als bei der Ausführungsform mit den Lichtwellenleiterhälften.

Wie bereits erwähnt, eignet sich die Erfindungsidee besonders für den Fall, dass die Drehung eines der Elemente über eine Hohlwelle erfolgt. Die Mantelkörper umgeben dann naturgemäß die Hohlwelle.

Nachfolgend werden bevorzugte Ausführungsformen der Erfindung unter Bezug auf die Zeichnung beschrieben, in der
- FIG 1: das Prinzip **gemäß einem ersten Aspekt** der Erfindung veranschaulicht, und
- FIG 2: einen Querschnitt durch die in FIG 1 gezeigte Anordnung darstellt,
- FIG 3: das Prinzip **gemäß einem zweiten Aspekt** der Erfindung veranschaulicht und
- FIG 4: einen Querschnitt durch die Anordnung aus FIG 3 darstellt,
- FIG 5, FIG 6: konkrete Bauformen zur zweiten Ausführungsform der Erfindung veranschaulichen,
- FIG 7: das Prinzip **einer Ausführungsform, die vorliegend nicht beansprucht ist**, veranschaulicht und
- FIG 8: einen Querschnitt durch die Anordnung aus FIG 7 darstellt.

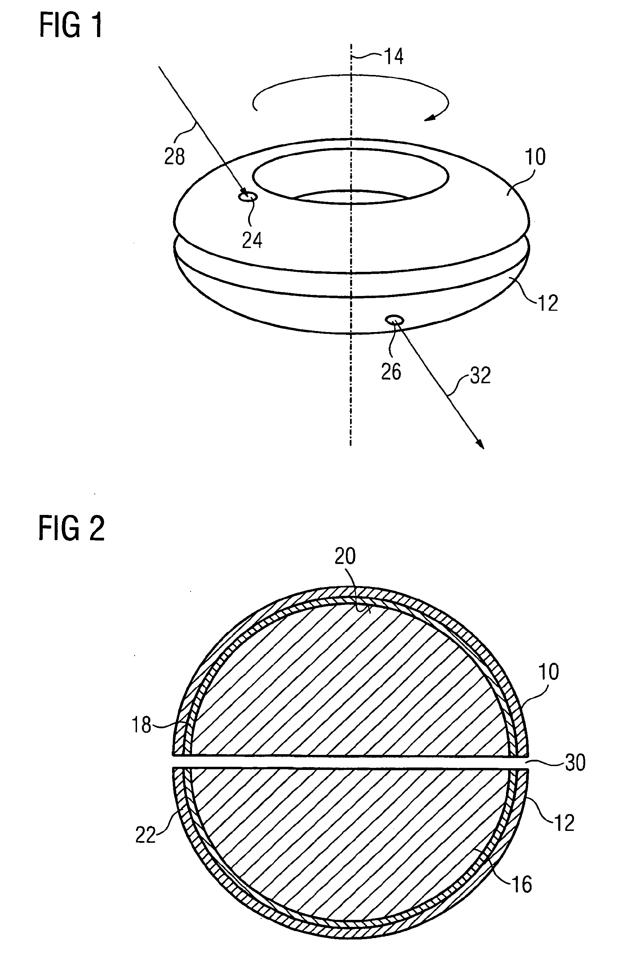

Vorliegend geht es um eine Maschine, an der ein Element drehbar ist, üblicherweise gegenüber einem im Raum feststehenden Element. Es ist nun bei modernen Anwendungen häufig erforderlich, dass Informationen von dem feststehenden Element auf das sich drehende Element übertragen werden oder umgekehrt. Bei der vorliegenden Erfindung ist den unterschiedlichen Ausführungsformen gemeinsam, dass sie für den Fall geeignet sind, dass die Drehung über eine Hohlwelle erfolgt, so dass in der Drehachse kein Datenaustausch möglich ist. Allen Ausführungsformen ist gemeinsam, dass die Datenkommunikation über optische Signale erfolgt. Die vorliegenden Ausführungsformen ermöglichen es sämtlich, dass lediglich eine einzige Lichtquelle und ein einziger Lichtempfänger verwendet werden müssen. In den FIG 1, 3 und 7 sind **zwei** unterschiedliche **Aspekte der Erfindung und eine Ausführungsform, die vorliegend nicht beansprucht ist**, veranschaulicht, und zwar sind weder die einzelnen Elemente gezeigt, noch Lichtquellen und Lichtempfänger, sondern lediglich das Medium, über das das Licht von der Lichtquelle zum Lichtempfänger übertragen wird.

Bei **dem Aspekt der Erfindung** von FIG 1 werden hierfür zwei Hälften eines torusförmigen Lichtwellenleiters verwendet. Mit anderen Worten ist jede Hälfte 10 und 12 ringförmig, und zwar an den jeweiligen Elementen derart angeordnet, dass der Mittelpunkt des Rings mit der Drehachse 14 des drehbaren Elements zusammenfällt. Der Querschnitt der Torushälften 10 und 12 ist halbkreisförmig. In an sich bekannter Weise umfasst jede Lichtwellenleiterhälfte 10 bzw. 12 einen Lichtwellenleiterkern 16, der von einem Mantelkörper 18 umgeben ist. Das Material, aus dem der Kern 16 gebildet ist, hat eine höhere Brechzahl als das Material, aus dem der Mantelkörper 18 gebildet ist. Für die Funktionsweise der Erfindung ist wesentlich, dass die Innenfläche 20 des Mantelkörpers 18 genau teilkreisförmig ist. Wie aus Lichtwellenleitern allgemein bekannt, wird das durch den Lichtwellenleiter gesandte Licht an dieser Innenfläche dann wegen der geringeren Brechzahl des Mantelkörpermaterials reflektiert. Im in der FIG 2 gezeigten Fall ist auch eine auf den Mantelkörper 18 aufgebrachte Beschichtung 22 jeweils halbtorusförmig. Die Form der Außenkontur ist jedoch für die Funktionsweise der Erfindung nicht relevant. Nun ist in der einen Lichtwellenleiterhälfte 10 eine Öffnung 24 ausgebildet, und in der zweiten Lichtwellenleiterhälfte 12 ist ebenfalls eine Öffnung 26 ausgebildet. Eine in der FIG 1 nicht gezeigte Lichtquelle (z. B. eine Sendediode) sendet Licht, wie durch den Pfeil 28 symbolisiert, aus und koppelt dieses über die Öffnung 24 in den Kern 16 ein. Das Licht durchläuft den Kern 16 der Lichtwellenleiterhälfte 10, tritt in den Luftspalt 30 zwischen den beiden Lichtwellenleiterhälften 10 und 12 ein und dann in den Kern der Lichtwellenleiterhälfte 12, um schließlich zur Innenfläche 20 des Mantelkörpers dieser Lichtwellenleiterhälfte 12 zu gelangen und dort reflektiert zu werden. Das reflektierte Licht gelangt zur Innenfläche 20 der ersten Lichtwellenleiterhälfte zurück, wird dort reflektiert, und das Hin- und Herreflektieren des Lichts erfolgt solange, bis der Lichtstrahl zur Öff nung 26 in der Lichtwellenleiterhälfte 12 gelangt und dort, wie durch den Pfeil 32 symbolisiert, austritt und zu einem in der FIG 1 nicht gezeigten Lichtempfänger (z. B. einer Empfangsdiode) gelangen kann. Kennzeichen der Erfindungsidee ist, dass unabhängig vom Drehwinkel der beiden Elemente und damit der beiden Lichtwellenleiterhälften 10 und 12 zueinander das Licht der einen Lichtquelle irgendwann zu dem einen Lichtempfänger gelangt.

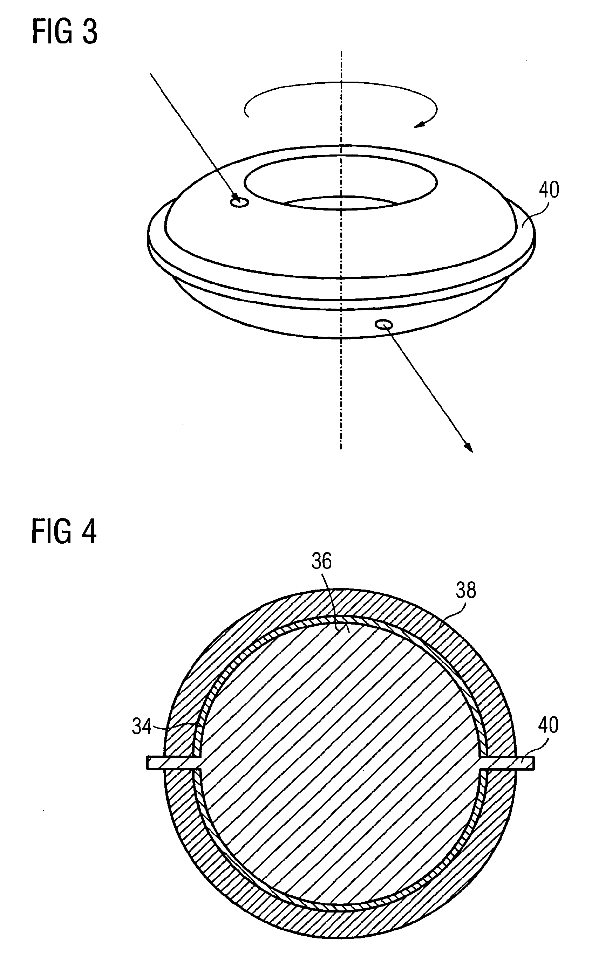

Dasselbe Grundprinzip kann auch auf andere Weise als durch die Verwendung von Lichtwellenleiterhälften verwendet werden. Ein **zweiter Aspekt** der Erfindung ist anhand der FIG 3 und 4 veranschaulicht. In diesem Fall werden zwei Hohltorushälften eingesetzt: Der Mantelkörper 34 bildet eine halbtorusförmige Innenfläche 36, die anders als bei der Ausführungsform gemäß FIG 1 und 2 nicht in einen Festkörper wie den Lichtwellenleiter 16 übergeht, sondern einen Raum bildet, der mit einer Flüssigkeit gefüllt werden kann. Die Außenkontur des Mantelkörpers 34 spielt keine Rolle. Bei der Ausführungsform von FIG 4 ist ein halb-hohltorusförmiger Stützkörper 38 dargestellt. Die Erfindung funktioniert **gemäß ihrem zweiten Aspekt** genau wie **gemäß ihrem ersten Aspekt,** wenn der Mantelkörper 34 aus einem Material mit niedrigerer Brechzahl gebildet ist als bei der mit 40 bezeichneten und in FIG 3 nur der Einfachheit der Darstellung halber als Scheibe dargestellten Flüssigkeit. Beispielsweise kann als Mantelkörpermaterial Glas mit einer Brechzahl von 1,46 verwendet werden und als Flüssigkeit Glyzerin mit einer Brechzahl von 1,474.

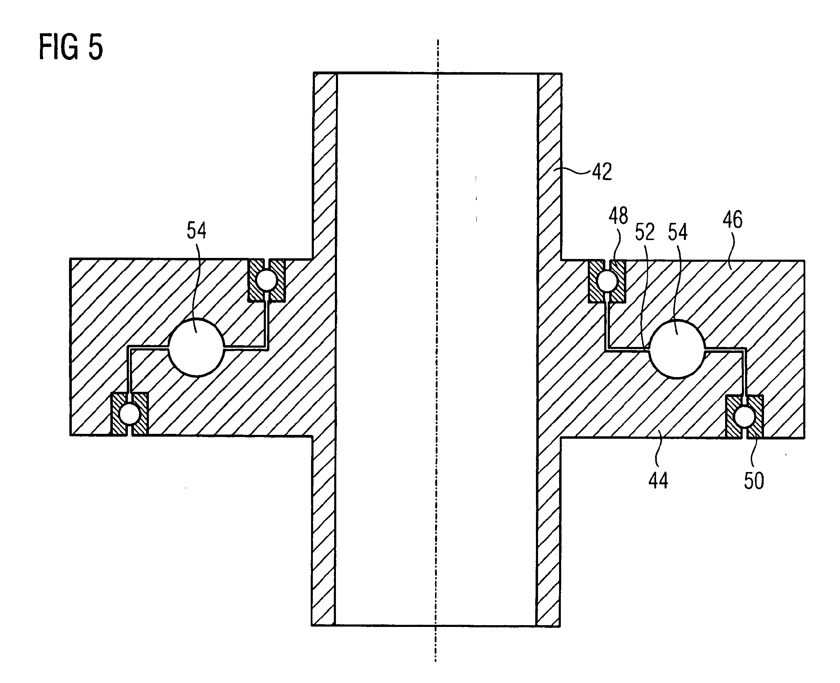

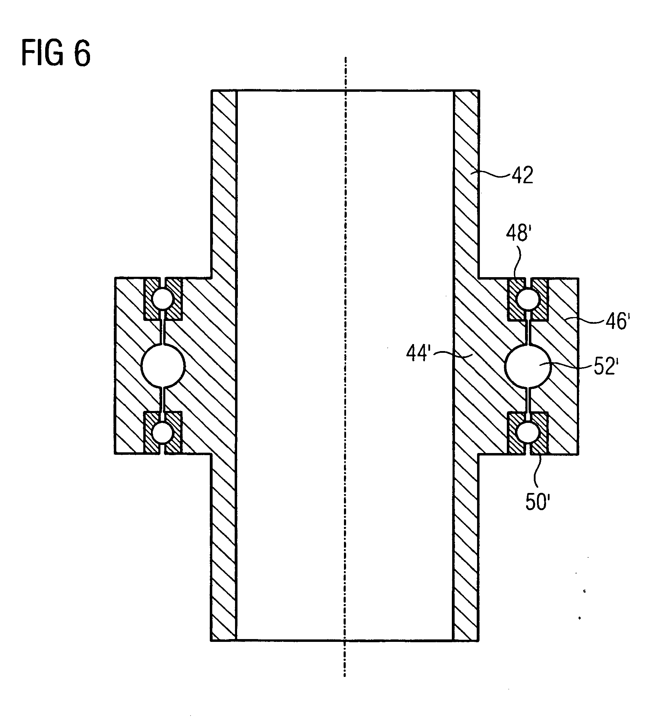

Dadurch, dass zwischen den relativ zueinander drehbaren Teilen eine Flüssigkeit anzuordnen ist, ergeben sich besondere Anforderungen bei der Gestaltung. Die FIG 5 und 6 zeigen Ausführungsbeispiele. Wie eingangs erwähnt, findet die Erfindung ihre bevorzugte Anwendung dann, wenn eine Hohlwelle 42 bereitgestellt ist, über die die Drehung des drehbaren Elements erfolgt. Vorliegend ist die Hohlwelle 42 in das drehbare Element 44 integriert. Das feststehende Element ist in FIG 5 mit 46 bezeichnet. Das Drehen wird durch Lager 48 und 50 ermöglicht, welche eine Kammer 52 abdichten. Herzstück der Kammer 52 ist eben ein Torus 54. Die FIG 5 zeigt einen Querschnitt durch die Anordnung, bei der der Torus 54 zweifach geschnitten ist, an um 180° versetzten Stellen. FIG 5 zeigt nicht im Detail den Mantelkörper. Man hat sich diesen als Beschichtung in einer Aussparung im Element 46 bzw. im Element 44 vorzustellen. Bei der Ausführungsform gemäß FIG 5 erfolgt die Kommunikation in axialer Richtung.

Es ist auch eine Kommunikation in radialer Richtung ermöglicht. Eine Ausführungsform, bei der dies der Fall ist, zeigt FIG 6. Dort ist das drehbare Element mit 44' und das feststehende Element mit 46' bezeichnet. Eine Flüssigkeitskammer 52' ist zwischen Drehlagern 48' und 50' derart angeordnet, dass die beiden Hälften des Hohltorus durch eine axiale Linie voneinander getrennt sind, so dass der Lichtstrahl stets einen radialen Anteil hat, wenn er von der einen Hohltorushälfte zu anderen gesandt wird.

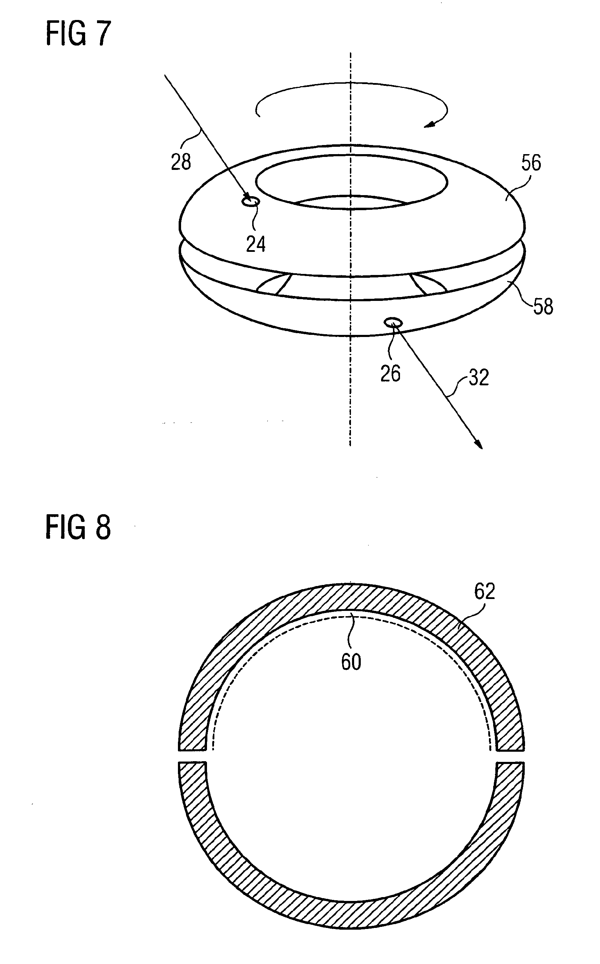

Eine weitere, **vorliegend nicht beanspruchte** Ausführungsform der Erfindung zeigt FIG 7: Wie bei dem **zweiten Aspekt der Erfindung** gemäß FIG 3 werden hierbei zwei Hohltorushälften 56 und 58 verwendet. Wichtig ist, dass der Mantelkörper 60 einen Innenraum bildet, der die Form eines Halbtorus hat. Die genaue Außenkontur des Mantelkörpers 60 oder des Körpers, in dem der Mantelkörper 60 sich gegebenenfalls befindet (siehe Bezugszahl 62 in FIG 8) ist hingegen unerheblich. Bei der Ausführungsform gemäß FIG 7 und FIG 8 muss die Innenfläche des Mantelkörpers 60 verspiegelt sein. Als Fluid, das die beiden Hohltorushälften füllt, wird vorliegend einfach Luft verwendet, wodurch eine Kammer nach Art der Kammer 52 bzw. 52' entbehrlich ist. Über die Öffnung 24 entsprechend dem Pfeil 28 in den Hohltorus eintretendes Licht wird an den Innenflächen des Mantelkörpers 60 der beiden Hohltorushälften 56 und 58 so oft hin- und herreflektiert, bis der Lichtstrahl die Öffnung 26 erreicht und entsprechend dem Pfeil 32 austritt.

## Patentansprüche

1. Anordnung aus zwei Elementen, von denen das eine Element relativ zu dem anderen Element um eine Drehachse (14) drehbar ist, wobei die Anordnung eine an beiden Elementen angeordnete, die Datenübertragung von dem einen zum anderen Element ermöglichende Einrichtung aufweist,
wobei die Einrichtung an beiden Elementen jeweils einen Mantelkörper (18, 34, 60) umfasst, welcher eine Innenfläche (20, 36) hat, welche ringförmig ist und konzentrisch zu der Drehachse (14) angeordnet ist, wobei an beiden Elementen der jeweilige Mantelkörper (18, 34, 60) mindestens eine Öffnung (24, 26) aufweist,
und wobei die Mantelkörper (18) jeweils einen ringförmigen Lichtleiterkern (16) der Einrichtung umgeben,
wobei die Innenfläche (20, 36) einen teilkreisförmigen Querschnitt aufweist und sich die teilkreisförmigen Querschnitte der Innenflächen (20,36) zu einem Kreis ergänzen,
wobei an dem einen Element Licht (28) von außerhalb des Mantelkörpers (18) über die zugeordnete Öffnung (24, 26) in den durch die Innenfläche (20, 36) des jeweiligen Mantelkörpers definierten Raum mittels einer Lichtquelle einkoppelbar ist und an dem anderen Element aus dem durch die Innenfläche des jeweiligen Mantelkörpers definierten Raum Licht (32) über die zugeordnete Öffnung (24, 26) nach außerhalb des Mantelkörpers (18) zu einem Lichtempfänger auskoppelbar ist,
**dadurch gekennzeichnet, dass** das Material, aus dem der Lichtleiterkern (16) gebildet ist, eine höhere Brechzahl hat als das Material, aus dem der Mantelkörper (18) gebildet ist, so dass das von der Lichtquelle eingekoppelte Licht an den Innenflächen (20, 36) der Mantelkörper so oft reflektiert wird, bis es zu dem Lichtempfänger ausgekoppelt wird.

2. Anordnung aus zwei Elementen, von denen das eine Element relativ zu dem anderen Element um eine Drehachse (14) drehbar ist, wobei die Anordnung eine an beiden Elementen abgeordnete, die Datenübertragung von dem einen zum anderen Element ermöglichende Einrichtung aufweist, und wobei die Einrichtung an beiden Elementen jeweils einen Mantelkörper (18, 34, 60) umfasst, welcher eine Innenfläche (20, 36) hat, welche ringförmig ist und konzentrisch zu der Drehachse (14) angeordnet ist, wobei an beiden Elementen der jeweilige Mantelkörper (18, 34, 60) mindestens eine Öffnung (24, 26) aufweist, wobei die Innenfläche (20, 36) einen teilkreisförmigen Querschnitt aufweist, wobei an dem einen Element Licht (28) von außerhalb des Mantelkörpers (18) über die zugeordnete Öffnung (24, 26) in den durch die Innenfläche (20, 36) des jeweiligen Mantelkörpers definierten Raum mittels einer Lichtquelle einkoppelbar ist und an dem anderen Element aus dem durch die Innenfläche des jeweiligen Mantelkörpers definierten Raum Licht (32) über die zugeordnete Öffnung (24, 26) nach außerhalb des Mantelkörpers (18) zu einem Lichtempfänger auskoppelbar ist, wobei sich die teilkreisförmigen Querschnitte der Innenflächen (20,36) zu einem Kreis ergänzen,
**dadurch gekennzeichnet, dass** die Einrichtung ein in den Mantelkörpern (34, 60) angeordnetes Fluid (40) aufweist, welches eine Flüssigkeit (40) ist, die in einer Kammer (52, 52') zwischen zwei abgedichteten Drehlagern (48, 48'; 50, 50')der Anordnung, die die beiden Elemente (44, 44';46, 46') miteinander koppeln, angeordnet ist,
wobei die Flüssigkeit (40) durchsichtig ist und eine höhere Brechzahl hat als das Material, aus dem die Mantelkörper (34) gebildet sind, so dass das von der Lichtquelle eingekoppelte Licht an den Innenflächen (20, 36) der Mantelkörper so oft reflektiert wird, bis es zu dem Lichtempfänger ausgekoppelt wird.

3. Anordnung nach Anspruch 2,
**dadurch gekennzeichnet, dass** die Mantelkörper (34) aus Glas bestehen und die Flüssigkeit Glyzerin ist.

4. Anordnung nach einem der vorhergehenden Ansprüche,
**dadurch gekennzeichnet, dass** beide Mantelkörper eine Hohlwelle (42) umgeben, über die eine Drehung der Elemente (44, 46) erfolgt.

## Claims

1. Arrangement comprising two elements, of which the one element can be rotated relative to the other element about an axis of rotation (14), wherein the arrangement has a device arranged on both elements enabling data transmission from the one to the other element,
wherein the device on both elements includes a cover body (18, 34, 60) in each case, which has an inner surface (20, 36), which is annular and is arranged so as to be concentric to the axis of rotation (14), wherein on both elements the respective cover body (18, 34, 60) has at least one opening (24, 26),
and wherein the cover bodies (18) surround an annular optical fibre core (16) of the device in each case,
wherein the inner surface (20, 36) has a part semicircular cross section and the part semicircular cross sections of the inner surfaces (20, 36) extend to form a circle, wherein, on the one element, light (28) from outside the cover surface (18) can be coupled in by means of a light source via the assigned opening (24, 26) into the space defined by the inner surface (20, 36) of the respective cover body and light (32) can be coupled out of the space defined by the inner surface of the cover body at the other element via the assigned opening (24, 26) to a light receiver arranged outside the cover body (18),
**characterised in that** the material from which the optical fibre core (16) is formed has a higher refractive index than the material from which the cover body (18) is formed, so that the light coupled in from the light source is reflected at the inner surfaces (20, 36) of the cover body until it is coupled out to the light receiver.

2. Arrangement comprising two elements, of which the one element can be rotated relative to the other element about an axis of rotation (14), wherein the arrangement has a device arranged on both elements enabling data transmission from the one to the other element, and
wherein the device on both elements includes a cover body (18, 34, 60) which in each case has an inner surface (20, 36), which is annular and arranged so as to be concentric to the axis of rotation (14),wherein on both elements the respective cover body (18, 34, 60) has at least one opening (24, 26), wherein the inner surface (20, 36) has a part semicircular cross section, wherein on the one element light (28) from outside the cover surface (18) can be coupled in by means of a light source via the assigned opening (24, 26) into the space defined by the inner surface (20, 36) of the respective cover body and light (32) can be coupled out of the space defined by the inner surface of the cover body at the other element via the assigned opening (24, 26) to a light receiver arranged outside the cover body (18), wherein the part semicircular cross sections of the inner surfaces (20, 36) extend to form a circle,
**characterised in that** the device has a fluid (40) arranged in the cover bodies (34, 60) which is a liquid (40), which is arranged in a chamber (52, 52') between two sealed pivot bearings (48, 48'; 50, 50') of the arrangement, which couple the two elements (44, 44';46, 46') to one another, wherein the liquid (40) is transparent and has a greater refractive index than the material from which the cover bodies (34) are formed, so that the light coupled in from the light source is reflected onto the inner surfaces (20, 36) of the cover body until it is coupled out to the light receiver.

3. Arrangement according to claim 2,
**characterised in that** the cover bodies (18) are made of glass and the liquid is glycerin.

4. Arrangement according to one of the preceding claims,
**characterised in that** both cover bodies surround a hollow shaft (42), by way of which a rotation of the elements (44, 46) is effected.

## Revendications

1. Agencement de deux éléments, dont l'un peut tourner par rapport à l'autre autour d'un axe ( 14 ) de rotation, l'agencement ayant un dispositif qui est monté sur les deux éléments et qui permet la transmission de données de l'un des éléments à l'autre,
dans lequel le dispositif comprend sur les deux éléments respectivement une enveloppe ( 18, 34, 60 ) qui a une surface ( 20, 36 ) intérieure, qui est annulaire et qui est concentrique à l'axe ( 14 ) de rotation, chaque enveloppe ( 18, 34, 60 ) sur les deux éléments ayant au moins une ouverture ( 24, 26 ),
et dans lequel les enveloppes ( 18 ) entourent respectivement un coeur ( 16 ) annulaire de fibre optique du dispositif,
dans lequel la surface ( 20, 36 ) intérieure a une section transversale en forme d'arc de cercle et les sections transversales en forme d'arc de cercle des surfaces ( 20, 36 ) intérieures se complètent en un cercle,
dans lequel sur l'un des éléments de la lumière ( 28 ) peut, de l'extérieur de l'enveloppe ( 18 ) en passant pour l'ouverture ( 24, 26 ) associée, être injectée au moyen d'une source lumineuse dans l'espace défini par la surface ( 20, 36 ) intérieure de l'enveloppe respective et, sur l'autre élément de la lumière ( 32 ), peut être sortie de l'espace défini par la surface intérieure de l'enveloppe respective à l'extérieur de l'enveloppe ( 18 ) vers un récepteur de lumière en passant par l'ouverture ( 24, 36 ) associée,
**caractérisé en ce que** la matière dont est formé le coeur ( 16 ) de fibre optique à un indice de réfraction plus grand que la matière dont est formée l'enveloppe ( 18 ) de sorte que la lumière injectée par la source lumineuse est réfléchie sur la face ( 20, 36 ) intérieure de l'enveloppe aussi souvent qu'il le faut pour qu'elle sorte vers le récepteur de lumière.

2. Agencement de deux éléments, dans lequel le dispositif comprend sur les deux éléments respectivement une enveloppe ( 18, 34, 60 ) qui a une surface ( 20, 36 ) intérieure, qui est annulaire et qui est concentrique à l'axe (14) de rotation, chaque enveloppe ( 18, 34, 60 ) sur les deux éléments ayant au moins une ouverture ( 24, 26 ),
dans lequel les enveloppes ( 18 ) entourent respectivement un coeur ( 16 ) annulaire de fibre optique du dispositif,
dans lequel la surface ( 20, 36 ) intérieure a une section transversale en forme d'arc de cercle,
dans lequel sur l'un des éléments de la lumière ( 28 ) peut, de l'extérieur de l'enveloppe ( 18 ) en passant pour l'ouverture ( 24, 26 ) associée, être injectée au moyen d'une source lumineuse dans l'espace défini par la surface ( 20, 36 ) intérieure de l'enveloppe respective et, sur l'autre élément de la lumière ( 32 ) peut être sortie de l'espace défini par la surface intérieure de l'enveloppe respective à l'extérieur de l'enveloppe ( 18 ) vers un récepteur de lumière en passant par l'ouverture ( 24, 36 ) associée,
dans lequel les sections transversales d'arc de cercle des surface ( 20, 36 ) intérieures se complètent en un cercle, **caractérisé en ce que** le dispositif a un fluide ( 40 ) qui est disposé dans les enveloppes ( 34, 60 ) et qui est un liquide ( 40 ) qui est disposé dans une chambre ( 52, 52' ) entre deux paliers ( 48, 48' ; 50, 50' ) tournant rendus étanches de l'agencement, paliers qui accouplent entre eux les deux éléments ( 44, 44' ; 46, 46' ),
dans lequel le liquide ( 40 ) est transparent et a un indice de réfraction plus grand que la matière dont sont formées les enveloppes ( 34 ), de sorte que la lumière injectée par la source lumineuse est réfléchie sur les surfaces ( 20, 36 ) intérieures des enveloppes aussi souvent qu'il est nécessaire jusqu'à ce qu'elle sorte du récepteur de lumière.

3. Agencement suivant la revendication 2,
**caractérisé en ce que** les enveloppes ( 34 ) sont en verre et le liquide est de la glycérine.

4. Agencement suivant l'une des revendications précédentes,
**caractérisé en ce que** les deux enveloppes entourent un arbre ( 42 ) creux, par lequel s'effectue une rotation des éléments ( 44, 46 ).
